Europäisches Patentamt

European Patent Office

Office européen des brevets

(19)

(11) Veröffentlichungsnummer: **0 121 899**
**A2**

(12) ## EUROPÄISCHE PATENTANMELDUNG

(21) Anmeldenummer: **84103691.6**

(51) Int. Cl.³: **B 60 N 1/06**

(22) Anmeldetag: **04.04.84**

(30) Priorität: **08.04.83 DE 3312598**

(43) Veröffentlichungstag der Anmeldung: **17.10.84**
**Patentblatt 84/42**

(84) Benannte Vertragsstaaten: **FR GB IT**

(71) Anmelder: **KEIPER RECARO GmbH & Co.,**
**Büchelstrasse 54-58, D-5630 Remscheid 14 (DE)**

(72) Erfinder: **Göldner, Walther, Fichtenweg 7,**
**D-7306 Denkendorf (DE)**
Erfinder: **Gassmann, Wolfgang, Sonnenweg 6,**
**D-7073 Lorch (DE)**
Erfinder: **Dolde, Heinz, Nelkenweg 6,**
**D-7312 Kirchheim-Ötlingen (DE)**

(74) Vertreter: **Patentanwälte Phys. Bartels, Dipl.-Ing. Fink**
**Dipl.-Ing. Heid, Lange Strasse 51,**
**D-7000 Stuttgart 1 (DE)**

(54) **Fahrzeugsitz.**

(57) Ein Fahrzeugsitz, insbesondere Kraftfahrzeugsitz, mit wenigstens einer gepolsterten Seitenwange (2), die seitlich neben der Sitzpolsterung angeordnet und um eine in Längsrichtung des Sitzpolsters verlaufende Achse (6) schwenkbar mit dem Polsterträger (4) des Sitzes verbunden ist, ist in unterschiedlichen Schwenkstellungen mittels einer Verriegelungseinrichtung (11) feststellbar, deren zusammenwirkende Teile (12, 14) mit dem Polsterträger (4) des Sitzes bzw. dem Polsterträger (3) der Seitenwange (2) verbunden sind. Der eine Teil (14) der Verriegelungseinrichtung (11) ist mit mehreren im Abstand nebeneinander angeordneten Rasten (13) versehen, und der andere Teil (12) ist als ein im wirksamen Zustand in wenigstens eine dieser Rasten (13) eingreifendes und im unwirksamen Zustand relativ zum erstgenannten Teil (14) längs dessen Rastenreihe bewegbares Rastglied (12) ausgebildet.

ACTORUM AG

0121899

11. Jan. 1983
Reg.-Nr. 126 522
Ref.: 3320orr

KEIPER RECARO GMBH & CO., 5630 Remscheid 14

Fahrzeugsitz

Die Erfindung betrifft einen Fahrzeugsitz, insbesondere einen Kraftfahrzeugsitz, mit wenigstens einer gepolsterten Seitenwange, die seitlich neben der Sitzpolsterung angeordnet, um eine in Längsrichtung des Sitzpolsters verlaufende Achse schwenkbar mit dem Polsterträger des Sitzes verbunden und in unterschiedlichen Schwenkstellungen mittels einer Verriegelungseinrichtung feststellbar ist, deren zusammenwirkende Teile mit dem Polsterträger des Sitzes bzw. dem Polsterträger der Seitenwange verbunden sind.

Außer Kraftfahrzeugsitzen dieser Art, bei denen die Seitenwange nur in der einen Endstellung ihres Schwenkbereiches feststellbar ist, sind auch Kraftfahrzeugsitze bekannt, bei denen die Seitenwange in unterschiedlichen Schwenkstellungen feststellbar ist. Die Verriegelungseinrichtung weist hier eine Gewindespin-

- 2 -

del auf, mittels deren die Seitenwange nicht nur in der gewählten Schwenkstellung feststellbar, sondern auch stufenlos verstellbar ist. Nachteilig ist hierbei jedoch, daß eine größere Anzahl von Umdrehungen notwendig ist, um die Seitenwange von der einen in die andere Endstellung zu schwenken. Es fehlt also die Möglichkeit einer Schnellverstellung.Ein weiterer Nachteil ist darin zu sehen, daß die Gewindespindel und ihre Antriebseinrichtung schlecht zugänglich sind und zu einer Verletzungsgefahr werden können.

Der Erfindung liegt die Aufgabe zugrunde, einen Fahrzeugsitz der eingangs genannten Art zu schaffen, bei dem die Seitenwange nicht nur in unterschiedlichen Schwenkstellungen feststellbar ist, sondern bei dem die Verstellung auch rasch und mühelos durchgeführt werden kann. Diese Aufgabe löst ein Fahrzeugsitz mit den Merkmalen des Anspruches 1.

Für eine Änderung der Schwenklage der Seitenwange brauchen bei dem erfindungsgemäßen Fahrzeugsitz nur die beiden zusammenwirkenden Teile der Verriegelungseinrichtung außer Eingriff gebracht zu werden. Die Seitenwange kann dann frei in die gewünschte Schwenklage gebracht werden, in der zur erneuten Verriegelung nur die Verriegelungseinrichtung freigegeben zu werden braucht. Zwar ist durch die Ausbildung der Verriegelungseinrichtung als Rastvorrichtung eine stufenlose Veränderung der Schwenklage nicht möglich. Der Schwenkwinkel zwischen zwei benachbarten Raststellungen kann jedoch so klein gewählt werden, daß die Verstellbarkeit in Stufen nicht störend ist.

Grundsätzlich kann der eine oder andere Teil der Verriegelungseinrichtung mit dem Polsterträger des Sitzes verbunden sein. Vorzugsweise ist es jedoch gemäß Anspruch 2 der die Rasten aufweisende Teil. Dieser Teil kann gemäß Anspruch 3 aus einem Blech bestehen, was den Vorteil hat, daß es sich hierbei um ein einfaches Bauteil handelt, das am Polsterträger beispielsweise angeschweißt werden kann.

Eine besonders einfache Handhabung bei der Verstellung der Schwenklage weist ein Ausführungsbeispiel mit den Merkmalen des Anspruches 4 auf. Hier braucht nämlich zum Lösen der Verriegelung die Seitenwange nur in Längsrichtung ihrer Schwenk-

- 3 -

achse entgegen einer Rückstellkraft ein Stück weit relativ zum Polsterträger des Sitzes bewegt zu werden. Danach kann die Seitenwange frei in der einen oder anderen Richtung geschwenkt werden. Für eine erneute Verriegelung braucht sie in der neuen Schwenklage nur freigegeben zu werden. Die Rückstellkraft verschiebt sie dann wieder in Längsrichtung der Schwenkachse, bis die Verriegelungseinrichtung wieder wirksam ist. Die Nachteile der eingangs genannten, bekannten Sitze sind hier vollständig vermieden.

Eine einfache Betätigung erhält man auch bei einer Ausbildung des erfindungsgemäßen Sitzes gemäß Anspruch 5. Hierbei braucht nur die Rastklinke in ihre Freigabestellung geschwenkt zu werden, um die Seitenwange in eine andere Schwenklage bringen zu können. Auch in konstruktiver Hinsicht ist diese Lösung einfach, was vor allem dann gilt, wenn man eine Ausgestaltung gemäß Anspruch 6 wählt.

Bei einer anderen bevorzugten Ausführungsform ist die Verriegelungseinrichtung gemäß Anspruch 7 ausgebildet. Zum Lösen der Verriegelungseinrichtung braucht hier nur die Schenkelfeder so weit relativ zu der Hülse in deren Umfangsrichtung verdreht zu werden, daß sie außer Eingriff mit den Umfangsrillen des Bolzens kommt. Die Hülse kann dann zusammen mit der Schenkelfeder in Längsrichtung des Bolzens relativ zu diesem bewegt werden, und in der neuen Schwenkstellung braucht nur die Schenkelfeder wieder freigegeben zu werden. Um trotz der kreisförmigen Bahn, auf der sich bei einer Schwenkbewegung der Seitenwange die Hülse bewegt, sofern sie der Seitenwange zugeordnet ist, einen geradlinigen Bolzen verwenden zu können, sind dessen beide Enden vorzugsweise gemäß Anspruch 8 in Langlöchern oder Schlitzen gelagert. Hierdurch läßt sich in konstruktiv einfacher Weise eine Anpassung der Lage des Bolzens an die sich bei einer Schwenkbewegung der Seitenwange ändernde Achslage der Hülse erreichen.

Sofern die Verriegelungseinrichtung eine Handhabe oder dergleichen zur Betätigung benötigt, kann diese in allen Fällen gut zugänglich und in einer Vertiefung des Polsters liegend angeord-

- 4 -

net sein, wodurch eine Verletzungsgefahr durch die Handhabe ausgeschlossen ist.

Im folgenden ist die Erfindung anhand von in der Zeichnung dargestellten Ausführungsbeispielen im einzelnen erläutert. Es zeigen:

Fig. 1 eine unvollständig dargestellte Ansicht eines ersten Ausführungsbeispiels,

Fig. 2 einen Schnitt nach der Linie II-II der Fig. 1,

Fig. 3 eine unvollständig dargestellte Ansicht eines zweiten Ausführungsbeispiels,

Fig. 4 einen Schnitt nach der Linie IV-IV der Fig. 3,

Fig. 5 eine unvollständig dargestellte Ansicht eines dritten Ausführungsbeispiels im verriegelten Zustand,

Fig. 6 eine Ansicht entsprechend Fig. 5 im entriegelten Zustand,

Fig. 7 einen Schnitt nach der Linie VII-VII der Fig. 5.

Ein Kraftfahrzeugsitz weist an seiner Rückenlehne seitlich je eine Seitenwange 2 auf, die spiegelbildlich gleich ausgebildet sind. Daher ist nur die eine Seitenwange dargestellt und im folgenden beschrieben.

Ein aus Blech gebogener Polsterträger 3 der Seitenwange 2 ist seitlich neben dem einen Längsholm 4 der Rückenlehne, welcher einen Teil von deren Polsterträger bildet, angeordnet und um eine in Längsrichtung des Längsholms 4 verlaufende Achse schwenkbar mit diesem Längsholm verbunden. Für diese Lagerung hat der Polsterträger 3 der Seitenwange zwei sich gegen den Längsholm 4 erstreckende Arme 5, die in Längsrichtung der Schwenkachse im Abstand voneinander liegen. Die Schwenkachse wird durch zwei zumindest im wesentlichen miteinander fluchtende Lagerzapfen 6 gebildet. Der untere, mit seinem Kopf am Arm 5 anliegende Lager-

- 5 -

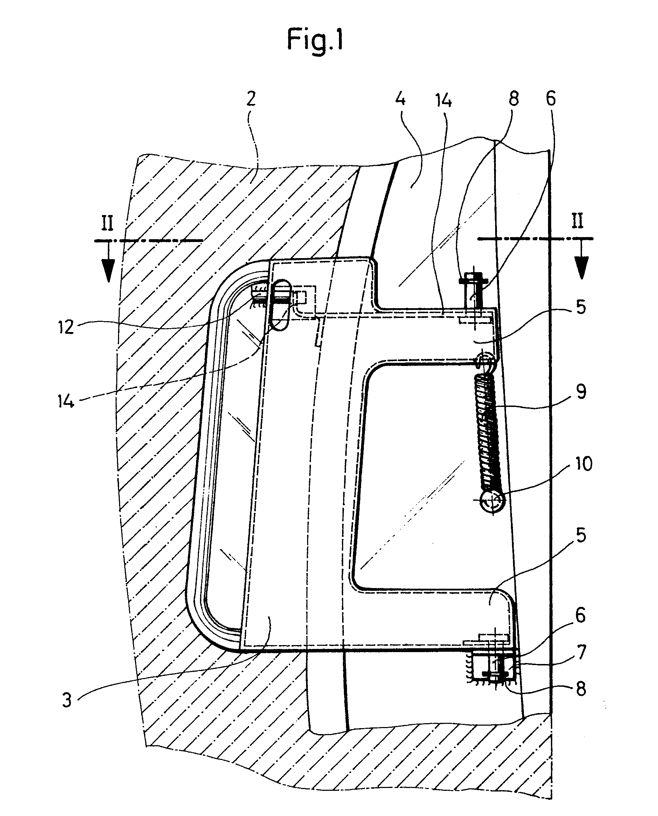

zapfen 6 durchdringt drehbar einen durch einen Abschnitt einer Winkelprofilschiene gebildeten Lagerbock 7, der mit dem Längsholm 4 verweißt ist, von oben nach unten. Der obere Lagerzapfen 6 durchdringt von unten nach oben einen als oberer Lagerbock dienenden Teil 14, der mit dem Längsholm verschweißt ist, und den oberen Arm 5. Je ein Federring 8 verhindert, daß der untere Lagerzapfen 6 aus seinem Lagerbock 7 und der obere Arm 5 aus dem oberen Lagerzapfen 6 nach oben herausgezogen werden können. Eine vorgespannte Schraubenfeder 9 dient als Rückholfeder und ist mit ihrem einen Ende in den oberen Arm 5 des Polsterträgers 3 eingehängt. Ihr unteres Ende wird von einem am Längsholm 4 festgelegten Halteelement 10 festgehalten. Wird die Seitenwange 2 in Längsrichtung der beiden Lagerzapfen 6 nach oben geschoben, dann erhöht sich die Spannung der Schraubenfeder 9. Daher unterstützt die Schraubenfeder 9 nach einer Freigabe der Seitenwange 2 deren Bewegung zurück in die in Fig. 1 dargestellte Ausgangsstellung.

- 5a -

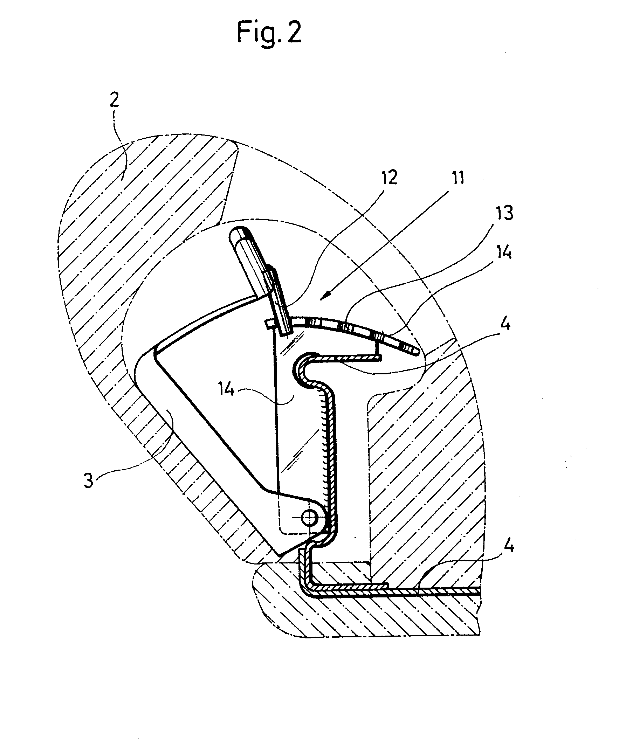

Um die Seitenwange 2 in unterschiedlichen Schwenklagen relativ zur Rückenlehne feststellen zu können, ist eine als Ganzes mit 11 bezeichnete Verriegelungseinrichtung vorgesehen, die aus einem am Polsterträger 3 der Seitenwange 2 festgelegten Stift 12 und dem bereits erwähnten, Rasten 13 aufweisenden Teil 14 besteht, bei dem es sich um einen mit dem Längsholm 4 verschweißten Blechkörper handelt. Wie Fig. 2 zeigt, weist der Teil 14 eine hochgestellte Randzone auf, die in einer zu der durch die beiden Lagerzapfen 6 definierten Schwenkachse konzentrisch verlaufenden Zylinderfläche liegt. Die Rasten 13, die aus dieser hochgestellten Randzone ausgestanzt sind, sind nach oben offen. Ihre Breite ist auf den Durchmesser des Stiftes 12 abgestimmt und ihr Abstand voneinander sowie ihre Anzahl sind entsprechend den Verstellstufen bzw. dem Verstellbereich gewählt. Wie Fig. 2 zeigt, ist der Stift 12 so am Teil 14 angeschweißt, daß seine Längsachse zumindest annähernd in radialer Richtung zur Schwenkachse der Seitenwange 2 verläuft und daß er dann, wenn die Arme 5 des Polsterträgers 3 auf den Lagerböcken 7 aufliegen, tiefer als der obere freie Rand der die Rasten 13 aufweisenden Randzone liegt. Der Stift 12 kann deshalb in eine der Rasten 13 eingreifen und dabei die Seitenwange 2 formschlüssig gegen eine Verschwenkung sichern.

Für eine Veränderung der Schwenklage der Seitenwange 2 hebt der Sitzbenutzer die Seitenwange an, er verschiebt sie also in Längsrichtung der Lagerzapfen 6 nach oben entgegen der Kraft der Schraubenfeder 9. In der oberen, durch den Federring 8 begrenzten Position ist der Stift 12 aus der Raste 13 vollständig herausgetreten, in die er zuvor eingegriffen hat.

Nun schwenkt der Sitzbenutzer die Seitenwange 2 in die neue Schwenklage und gibt sie dann wieder frei. Durch ihr eigenes Gewicht und durch die Kraft der Schraubenfeder 9 wird die Seitenwange 2 dann wieder nach unten bewegt und, falls der Stift 12 auf eine der Rasten 13 ausgerichtet ist, wieder selbsttätig verriegelt. Da die Möglichkeit besteht, daß der Stift 12 nach der Freigabe der Seitenwange 2 auf einen der Zähne auftrifft, welche der Teil 14 zwischen je zwei Rasten 13 bildet, ist es zweckmäßig, nach der Freigabe der Seitenwange 2 durch eine geringe Schwenkbewegung zu prüfen, ob der Stift 12 eingerastet ist oder ihn durch diese geringe Schwenkbewegung zum Einrasten zu bringen. Selbstverständlich kann man aber auch die zwischen den Rasten 13 gebildeten Zähne zu ihrem freien Ende hin spitz zulaufend ausbilden, um dadurch sicherzustellen, daß in jeder Schwenklage die Seitenwange 2 selbsttätig wieder verriegelt wird.

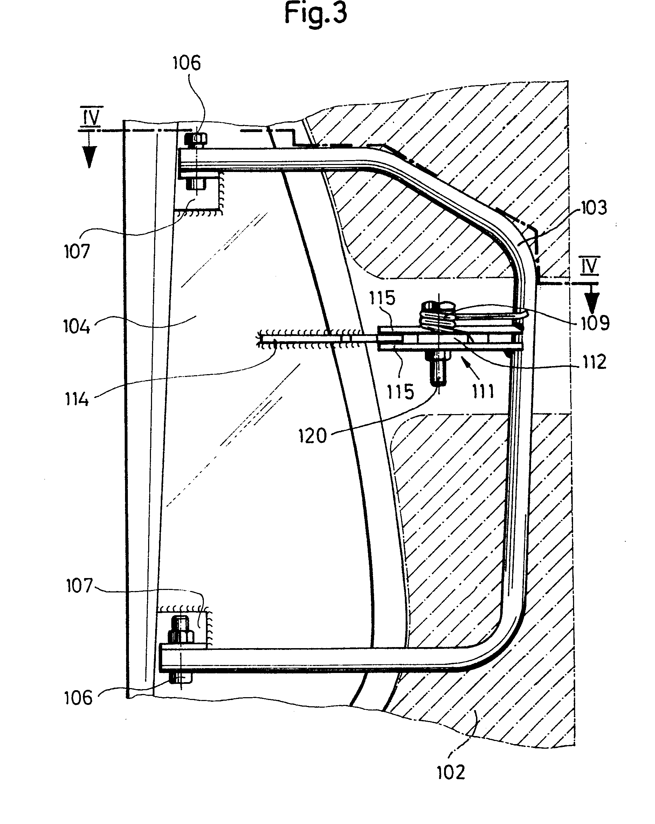

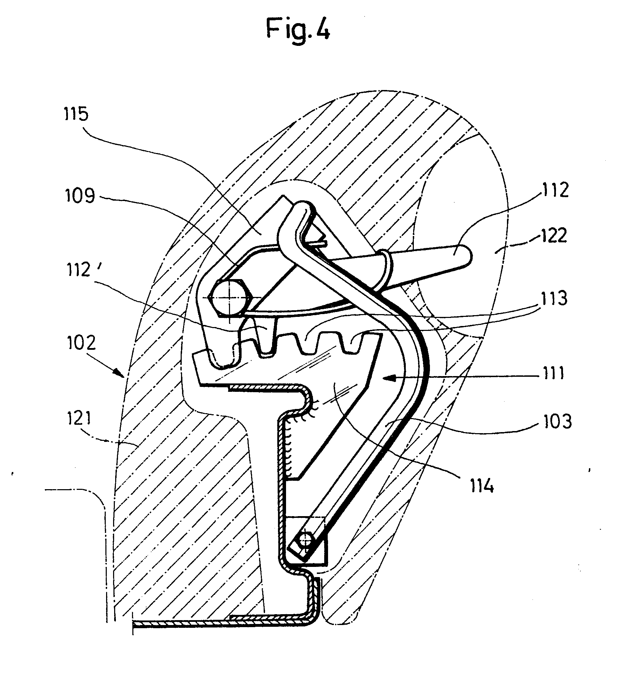

Bei dem in den Fig. 3 und 4 dargestellten Ausführungsbeispiel handelt es sich ebenfalls um einen Kraftfahrzeugsitz mit zwei spiegelbildlich gleich ausgebildeten Seitenwangen 102, die wie bei dem ersten Ausführungsbeispiel am einen bzw. am anderen Längsholm 104 der Rückenlehne angelenkt sind, und zwar mit je einer in Längsrichtung des Längsholms verlaufenden Schwenkachse. Der Polsterträger 103 der Seitenwange 102 wird im wesentlichen durch einen bügelförmigen Stab gebildet, der an seinen beiden gegen den zugeordneten Längsholm 104 weisenden Enden mittels zweier Lagerzapfen 106, die miteinander fluchten, an zwei am Längsholm befestigten Lagerböcken 107 axial unverschiebbar gelagert.

Wie insbesondere Fig. 4 zeigt, ist die Seitenwange 2 in unterschiedlichen Schwenklagen mittels einer Verriegelungseinrichtung 111 feststellbar. Die Verriegelungseinrichtung 111 weist einen am Längsholm 104 angeschweißten Teil 114 auf, bei dem es sich um eine Platte aus Blech handelt, die in einer von der Schwenkachse der Seitenwange 102 lotrecht durchstoßenen Ebene liegt und längs einer konzentrisch zur Schwenkachse verlaufenden Randzone mit mehreren im Abstand nebeneinander angeordneten Rasten 113 versehen ist, die aus der Platte ausgestanzt sind

- 7 -

und in der von der Schwenkachse wegweisenden Richtung offen sind. Die Zahl der Rasten 113 sowie ihr Abstand voneinander hängen vom gewünschten Schwenkbereich und von der Größe der Stufen ab, in denen eine Verstellung der Seitenwange 102 möglich ist.

Mit dem Teil 114 wirkt eine Klinke 112 zusammen, die im Ausführungsbeispiel nur einen an die Form der Rasten 113 angepaßten Zahn 112' hat, aber selbstverständlich auch mehrere Zähne für einen gleichzeitigen Eingriff in mehrere der Rasten 113 aufweisen könnte. Die Klinke 112 liegt in der Ebene des Teiles 114 zwischen zwei plattenförmigen Lagerwangen 115, die im Bereich ihres einen Endes mit dem Polsterträger 103 verschweißt sind und im Bereich ihres anderen Endes zwischen sich die mit den Rasten 113 versehene Randzone des Teiles 114 aufnehmen. Hierdurch ist eine Ausrichtung der Klinke 112 auf den Teil 114 gewährleistet, auch wenn die Lagerung des Polsterträgers 103 ein größeres Spiel hat.

Als Lagerzapfen für die Klinke 112 dient ein die Lagerwangen 115 und die Klinke 112 durchdringender Schraubbolzen 120, um den zwischen seinem Kopf und der benachbarten Lagerwange 115 eine Schenkelfeder 109 gelegt ist, deren Schenkel an der Klinke 112 bzw. am Polsterträger 103 angreifen. Hierdurch übt die Schenkelfeder 109 auf die Klinke 112 stets ein Drehmoment im Sinne eines Schwenkens der Klinke in die in Fig. 4 dargestellte Raststellung aus.

Das freie, gegen die Außenseite der Seitenwange 102 weisende Ende der Klinke 112 ragt in eine in der Außenseite der Polsterung 121 der Seitenwange vorgesehene Vertiefung 122. Der Sitzbenutzer kann beim Eingriff in diese Vertiefung 122 das freie Ende der Klinke 112 erfassen und entgegen dem Uhrzeigersinn bei einer Blickrichtung gemäß Fig. 4 so weit schwenken, daß der Zahn 112' der Klinke außer Eingriff kommt. Nun kann die Seitenwange 102 in eine andere Schwenklage bezüglich der Rückenlehne gebracht werden. Beim Loslassen der Klinke 112 wird diese, falls der Zahn 112' auf eine der Rasten 113 ausgerichtet ist, von der Schenkelfeder 109 in die Verriegelungsstellung geschwenkt. Trifft hingegen der Zahn 112' auf einen Bereich zwischen zwei Rasten 113, dann muß nach dem Loslassen der Klinke 112 die Seitenwange 102 noch geringfügig in die eine oder andere Richtung geschwenkt werden, bis der Zahn 112 in eine der Rasten 113 einrasten kann.

Wie sich aus der vorstehenden Beschreibung ergibt, ist dieses Ausführungsbeispiel auch dann ohne konstruktive Änderungen voll funktionsfähig, wenn die Seitenwange 102 seitlich neben dem Sitzteil eines Sitzes angeordnet ist.

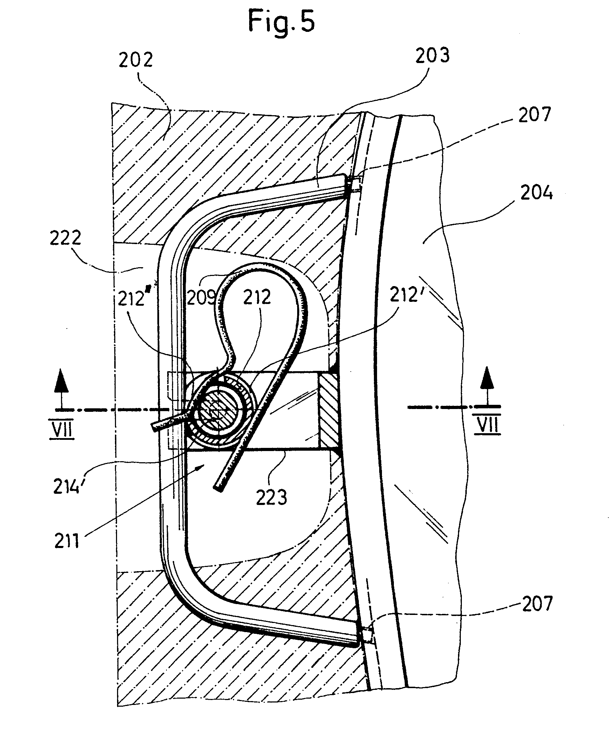

Letzteres gilt auch für das Ausführungsbeispiel gemäß den Fig. 5 bis 7, bei dem die beiden spiegelbildlich gleich ausgebildeten Seitenwangen 202 seitlich neben dem einen bzw. anderen Längsholm 204 einer Rückenlehne angeordnet sind.

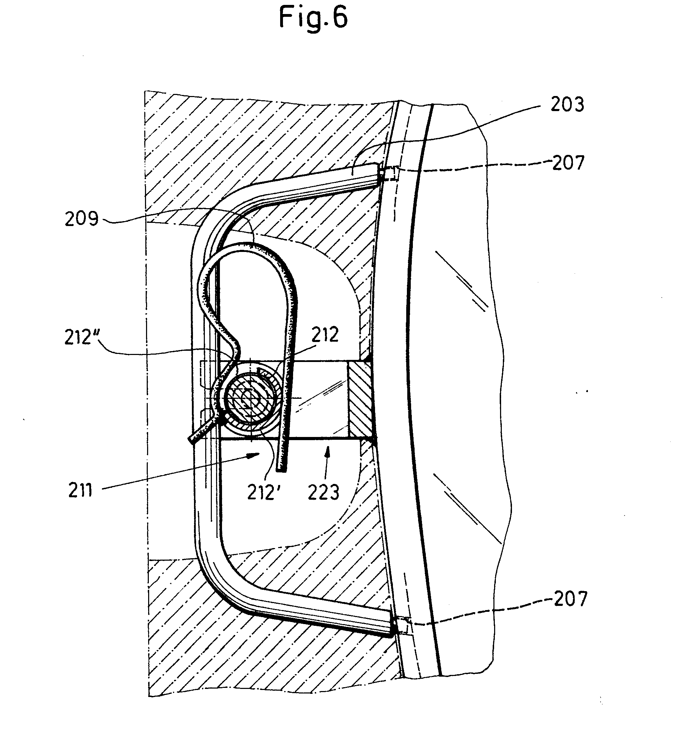

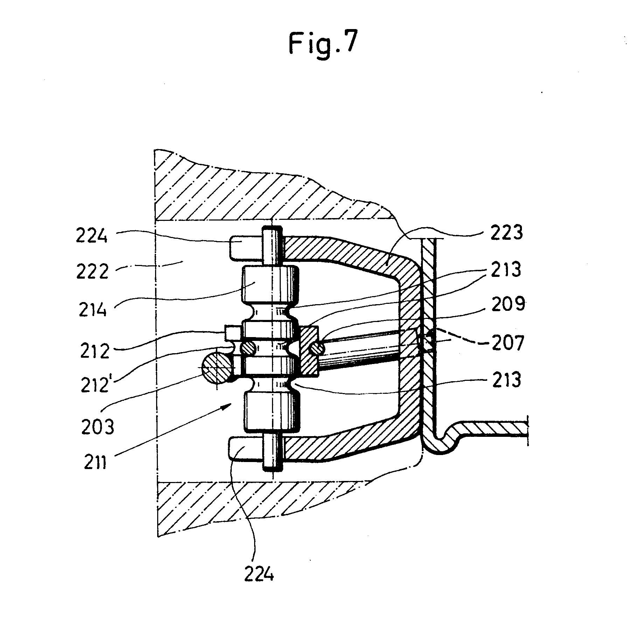

Wie bei dem zweiten Ausführungsbeispiel besteht der Polsterträger 203 aus einem zu einem Bügel geformten Stab. Die Lagerung des Polsterträgers 203 am Längsholm 204 erfolgt jedoch, wie die Fig. 6 und 7 zeigen, in anderer Weise, nämlich derart, daß die im Durchmesser verringerten Endabschnitte der beiden Schenkel des Polsterträgers 203 in je eine Öffnung 207 des Längsholmes eingreifen, und zwar mit einem so großen Spiel, daß der Polsterträger 203 um eine in Längsrichtung des Längsholms 204 verlaufende Achse verschwenkbar ist. Selbstverständlich könnte die Lagerung des Polsterträgers 203 auch in der beim zweiten Ausführungsbeispiel vorgesehenen Weise ausgebildet sein.

Im Bereich zwischen den beiden Öffnungen 207 ist mit dem Längsholm 204 das Joch eines C-artigen Haltebügels 223 angeschweißt, dessen beide Schenkel sich gegen den Mittelabschnitt des Polsterträgers 203 erstrecken und mit je einem zu ihrem freien Ende hin offenen Längsschlitz 224 versehen sind. In diesen beiden Längsschlitzen 224 sind die Enden eines Bolzens 214 gelagert, der einen Teil einer als Ganzes mit 211 bezeichneten Verriegelungseinrichtung bildet, mittels deren die Seitenwange 202 in unterschiedlichen Schwenkstellungen feststellbar ist. Wie Fig. 7 zeigt, ist der Bolzen 214 mit mehreren in seiner Längsrichtung im Abstand voneinander angeordneten Ringnuten 213 versehen, die als Rasten dienen. Daher ist die Anzahl der Ringnuten 213 und ihr Abstand voneinander entsprechend dem gewünschten Schwenkbereich und der Stufung gewählt, mit der die Seitenwange verstellbar sein soll.

Den Bolzen 214 umgibt mit etwas Spiel eine Buchse 212, die im Bereich ihrer Außenmantelfläche mit dem Polsterträger 203 verschweißt ist und eine axiale Länge hat, die wesentlich geringer ist als die axiale Länge des Bolzens 214. Die Buchse 212, die ebenfalls einen Teil der Verriegelungseinrichtung 211 bildet, weist in ihrer Außenmantelfläche in einer seitlich über den Polsterträger 203 überstehenden Ringzone eine in Umfangsrichtung verlaufende Rille 212' auf, die auf einem Teil ihrer Länge als ein die Buchse durchdringender Schlitz 212" ausgebildet ist. In der Rille 212' liegen die beiden Schenkel einer Schenkelfeder 209, die bei diesem Ausführungsbeispiel einen Teil der Verriegelungseinrichtung 211 bildet. Liegt die Schenkelfeder 209 in der in Fig. 5 dargestellten Lage bezüglich der Buchse 212, dann durchgreift ihr einer Schenkel den Schlitz 212" und greift in eine der Ringnuten 213 des Bolzens 214 ein. In dieser Verriegelungsstellung ist die Seitenwange 202 gegen ein Verschwenken gesichert, da die Schenkelfeder 209 eine Bewegung der Buchse 212 relativ zum Bolzen 214 in dessen Längsrichtung verhindert und der Bolzen gegen eine Bewegung in dieser Richtung durch das Halteelement 223 gesichert ist. Ob die Verriegelung nur kraftschlüssig oder aber formschlüssig ist, hängt von der Querschnittsform der Ringnuten 213 ab. Wird die Schenkelfeder 209 aus der in Fig. 5 dargestellten Lage in die in Fig. 6 dargestellte Lage, also entgegen dem Uhrzeigersinn bei einer Blickrichtung gemäß den Fig. 5 und 6, geschwenkt, dann wird der wellenförmig gebogene Schenkel der Schenkelfeder 209 aus der Ringnut 213 ausgehoben, weil er bei dieser Schwenkbewegung auf denjenigen Teil der Rille 212' aufläuft, in der diese nicht den Schlitz 212'' bildet. Die beiden Schenkel der Schenkelfeder 209 werden also gespreizt. Nun kann die Seitenwange 202 geschwenkt werden, weil sich die Buchse 212 jetzt auf dem Bolzen 214 in dessen Längsrichtung verschieben läßt.

Bei einer solchen Verschiebung bewegt sich die Buchse 212 auf einer Kreisbahn um die Schwenkachse der Seitenwange 202. Dennoch kommt es nicht zu einem Verklemmen zwischen der Buchse 212 und dem Bolzen 214, da dieser dank der Längsschlitze 224 sich an die unterschiedlichen Achslagen der Buchse 212 anpassen kann.

Um nach einer Änderung der Schwenklage der Seitenwange 202 letztere wieder zu verriegeln, braucht nur die Schenkelfeder 209 wieder in ihre Verriegelungsstellung geschwenkt zu werden. Bei dieser Schwenkbewegung tritt der wellenförmig gebogene Schenkel der Schenkelfeder 209 wieder in den Schlitz 212'' ein und rastet dann auch in eine der Ringnuten 213 ein, sobald er auf eine dieser Ringnuten ausgerichtet ist. Es muß also gegebenenfalls die Schwenklage der Seitenwange 202 noch etwas in der einen oder anderen Schwenkrichtung korrigiert werden, um die Schenkelfeder auf eine der Ringnuten 213 auszurichten.

Das Erfassen des Jochabschnitts der Schenkelfeder 209 zum Zwecke der Verschwenkung ermöglicht eine Vertiefung 222, die von der Außenseite des Polsters 221 der Seitenwange in diese eindringt.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

-11/Ansprüche-

- 11 -

P a t e n t a n s p r ü c h e

1. Fahrzeugsitz, insbesondere Kraftfahrzeugsitz, mit wenigstens einer gepolsterten Seitenwange, die seitlich neben der Sitzpolsterung angeordnet, um eine in Längsrichtung des Sitzpolsters verlaufende Achse schwenkbar mit dem Polsterträger des Sitzes verbunden und in unterschiedlichen Schwenkstellungen mittels einer Verriegelungseinrichtung feststellbar ist, deren zusammenwirkende Teile mit dem Polsterträger des Sitzes bzw. dem Polsterträger der Seitenwange verbunden sind, dadurch gekennzeichnet, daß der eine Teil (14;114;214) der Verriegelungseinrichtung (11;111;211) mit mehreren im Abstand nebeneinander angeordneten Rasten (13;113;213) versehen ist und der andere Teil als ein im wirksamen Zustand in wenigstens eine dieser Rasten eingreifendes und im unwirksamen Zustand relativ zum erstgenannten Teil (14;114;214) längs dessen Rastenreihe bewegbares Rastglied (12;112,112';209,212, 212',212'') ausgebildet ist.

2. Fahrzeugsitz nach Anspruch 1, dadurch gekennzeichnet, daß der die Rasten (13;113;213) aufweisende Teil (14;114;214) mit dem Polsterträger (4;104;204) des Sitzes und das Rastglied (12;112,112';209,212,212',212'') mit dem Polsterträger (3;103; 203) der Seitenwange (2;102;202) verbunden ist.

3. Fahrzeugsitz nach Anspruch 2, dadurch gekennzeichnet, daß der die Rasten (13;113) aufweisende Teil (14;114) ein am Polsterträger (4;104) des Sitzes befestigtes Blech ist und die Rasten (13;113) durch längs eines Randes dieses Bleches vorgesehene, zum Rand hin offene Ausnehmungen gebildet sind.

4. Fahrzeugsitz nach einem der Ansprüche 1 bis 3, dadurch gekennzeichnet, daß der Polsterträger (3) der Seitenwange (2) in Längsrichtung seiner Schwenkachse entgegen einer Rückstellkraft verschiebbar gelagert ist und die Rasten in dieser Verschieberichtung für den Austritt und den Wiedereintritt des Rastgliedes (12) bei einer entsprechenden Verschiebung der Seitenwange (2) offen sind.

0121899

- 12 -

5. Fahrzeugsitz nach einem der Ansprüche 1 bis 3, dadurch gekennzeichnet, daß das Rastglied als eine schwenkbar am Polsterträger (103) der Seitenwange (102) gelagerte Rastklinke (112,112') mit einem Betätigungsglied ausgebildet ist, die entgegen der Kraft einer Rückstellfeder (109) aus den Rasten (113) aushebbar ist.

6. Fahrzeugsitz nach Anspruch 5, dadurch gekennzeichnet, daß die Rastklinke (112,112') zwischen zwei am Polsterträger (103) der Seitenwange (102) festgelegten und beidseitig einen Abschnitt des schienenförmigen, die Rasten (113) tragenden Teils (114) der Verriegelungseinrichtung (111) übergreifenden Lagerwangen (115) angeordnet ist.

7. Fahrzeugsitz nach Anspruch 1 oder 2, dadurch gekennzeichnet, daß der die Rasten aufweisende Teil der Verriegelungseinrichtung (211) ein Bolzen (214) mit in seiner Längsrichtung im Abstand nebeneinander angeordneten Ringnuten (213) ist und das Rastglied eine den Bolzen (214) umfassende Hülse (212) aufweist, die mit dem Polsterträger (203) der Seitenwange (202) verbunden ist, einen sich über einen Teil des Umfangs erstreckenden Schlitz (212'') aufweist und eine Schenkelfeder (209) trägt, deren einer Schenkel bei geschlossener Verriegelungseinrichtung (211) durch den Schlitz (212'') hindurch in eine der Ringnuten (213) eingreift und bei unwirksamer Verriegelungseinrichtung (211) an der Außenmantelfläche der Hülse (212) anliegt.

8. Fahrzeugsitz nach Anspruch 7, dadurch gekennzeichnet, daß die beiden Enden des Bolzens (214) in Langlöchern oder Schlitzen (224) von zwei Lagerelementen (223) gelagert sind.

9. Fahrzeugsitz nach Anspruch 7 oder 8, dadurch gekennzeichnet, daß der Polsterträger (203) der Seitenwange (202) ein Bügel ist, dessen beide Enden schwenkbar in je eine Öffnung (207) des Polsterträgers (204) des Sitzes eingreifen.

- . -

0121899

Fig.1

Fa. Keiper Recaro........

Reg-Nr.: 126 522

2/7
0121899

# Fig. 2

Fa. Keiper Recaro.....

## Fig.3

Fa.Keiper Recaro......

Reg-Nr.:126 522

0121899

## Fig.4

115
109
112'
102
121

112
122
113
111
103
114

Fa. Keiper Recaro......

Reg-Nr.:126 522

0121899

# Fig. 5

202　203　207

222　204

212"　209　212　212'

VII　VII

214'

211　223

Fa. Keiper Recaro.......

Reg-Nr.: 126 522

0121899

## Fig.6

203

207

209

212″

212

211

212′    223

207

Fa. Keiper Recaro........

Reg-Nr.: 126 522

0121899

7/7

## Fig.7

224
222
214
212
212'
203
211

223
213
209
207
213

Fa.Keiper Recaro........

Reg-Nr.:126 522